## Europäisches Patentamt
## European Patent Office
## Office européen des brevets

(19)

(11) Veröffentlichungsnummer: **0 278 389**
**A2**

(12) **EUROPÄISCHE PATENTANMELDUNG**

(21) Anmeldenummer: **88101582.0**

(22) Anmeldetag: **04.02.88**

(51) Int. Cl.⁴: **B23C 5/22**

(30) Priorität: **06.02.87 US 11591**

(43) Veröffentlichungstag der Anmeldung:
**17.08.88 Patentblatt 88/33**

(84) Benannte Vertragsstaaten:
**AT BE CH DE ES FR GB IT LI NL SE**

(71) Anmelder: **INGERSOLL MASCHINEN UND WERKZEUGE GESELLSCHAFT MIT BESCHRÄNKTER HAFTUNG**
**Daimlerstrasse**
**D-5909 Burbach(DE)**

(72) Erfinder: **Koblesky, Robert Theodore, Ing.**
**2607 Starkweather Road**
**Rockford, Illinois 61107(US)**

(74) Vertreter: **Müller, Gerd et al**
**Patentanwälte**
**HEMMERICH-MÜLLER-GROSSE-POLLMEIER--MEY Hammerstrasse 2**
**D-5900 Siegen 1(DE)**

(54) **Schneideinsatz für Fräswerkzeuge sowie mit derartigen Schneideinsätzen ausgestattetes Fräswerkzeug.**

(57) Ein Schneideinsatz 20 für Fräswerkzeuge 44 ist als sechsekkiger Flachblock, vorzugsweise als Wendeschneidplatte, ausgeführt. Er besteht aus zwei zueinander parallelen Hauptflächen, die als Auflagefläche und als Freifläche verwendbar sind, aus zwei einander gegenüberliegenden Längskantenflächen, die im Schnittpunkt mit mindestens einer der Hauptflächen zwei zueinander parallele Schneidkanten bilden sowie aus zwei Querkantenflächen, die im Mittelbereich zu ihren Hauptabmessungen einen Einschnitt oder eine Vertiefung aufweisen, durch die an den Ecken der Hauptflächen seitwärts gerichtete Vorsprünge begrenzt werden. Einschnitte bzw. Ausnehmungen und Vorsprünge machen es möglich, eine Reihe baugleicher Schneideinsätze 20 entlang einer einzelnen Spannut bzw. Spankammer 46 so aufzunehmen, daß ihre Schneidkanten miteinander eine ununterbrochene Schnittbahn großer Länge bilden.

FIG. 1

# Schneideinsatz für Fräswerkzeuge sowie mit derartigen Schneideinsätzen ausgestattes Fräswerkzeug

Die Erfindung betrifft einen Schneideinsatz für Fräswerkzeuge, dessen aus einem Schneidwerkstoff bestehender Block im wesentlichen sechs äußere Begrenzungsflächen aufweist, nämlich zwei zueinander parallele und voneinander abgewendete Hauptflächen, zwei ebenfalls zueinander parallele und voneinander abgewendete Längskantenflächen sowie zwei wiederum zueinander parallele und voneinander abgewendete Querkantenflächen, wobei die beiden Hauptflächen jeweils eine Auflagefläche und eine Freifläche des Schneidwerkstoff-Blokkes bilden, während die Längskantenflächen an den Schnittpunkten mit mindestens einer der Hauptflächen zwei zueinander parallele Schneidkanten bestimmen sowie selbst als die Spanwinkelflächen des Schneidwerkstoff-Blokkes wirksam sind.

Gegenstand der Erfindung ist aber auch ein Fräswerkzeug mit mindestens einer in seinen Umfang eingearbeiteten Spannut oder Spankammer, entlang deren nacheilender Kante Schneideinsätze der vorstehend spezifizierten Art ausgerichtet und befestigt sind.

Es sind bereits Fräswerkzeuge der vorgenannten Art bekannt, welche eine die Schneidkanten-Länge eines einzelnen Schneideinsatzes bzw. Schneidwerkstoff-Blockes überschreitende Schnittlänge aufweisen.

Die bekannten Fräswerkzeuge sind mit den ebenfalls bekannten Schneideinsätzen der eingangs erwähnten Art so ausgestattet, daß die der Schnittlänge des Fräswerkzeuges entsprechende Schneidbahn der Schneideinsätze an den Stoßstellen zwischen zwei aufeinanderfolgenden Schneideinsätzen unterbrochen ist bzw. eine Lücke aufweist.

Zur Erzielung einer über die gesamte Schnittlänge eines Fräswerkzeuges ununterbrochenen bzw. lückenfreien Schneidbahn ist es daher notwendig, jeden Stoßstellenbereich zwischen zwei in Richtung der Schnittlänge aufeinanderfolgenden Schneideinsätzen jeweils durch einen zusätzlichen Schneideinsatz zu überbrücken, wobei diese zusätzlichen Schneideinsätze am Umfang des Fräswerkzeuges dann in einer nacheilenden Spannut oder Spankammer angeordnet werden müssen.

Es ist offensichtlich, daß mit einem Fräswerkzeug dieser bekannten Bauart, welche bspw. bei Stirnfräsern, Schaftfräsern, Zahnvorfräsern, Nutenfräsern oder dergleichen benutzt wird, eine über die vorgesehene Schnittlänge ununterbrochene Schneidbahn nur dann gewährleistet werden kann, wenn mit zwei Gruppen von gegneinander längsversetzten Schneideinsätzen gearbeitet wird, die naturgemäß am Umfang des Fräswerkzeuges einen erhöhten Einbauraum benötigen. Nachteilig ist dabei aber auch, daß durch die aus dem in Umfangsrichtung erforderlichen Platzbedarf resultierende Durchmesservergrößerung der Fräswerkzeuge deren Schnittleistung beeinträchtigt wird.

Besonders bei der Entwicklung von Stirnfräsern und Schaftfräsern wird der Werkzeugkonstrukteur durch die Notwendigkeit einer paarweisen Anordnung von voreilenden und nacheilenden Schneideinsätzen beträchtlich eingeschränkt. In besonderem Maße wirkt sich dies nachteilig für die Konstruk tion und Herstellung von Stirnfräsern und Schaftfräsern mit kleinen Durchmessern aus, weil diese in Umfangsrichtung nur mit einer geradzahligen Anzahl von Schneidkanten und Spannuten bzw. Spankammern, also mit zwei, vier oder sechs Schneidkanten und Spannuten bzw. Spankammern versehen werden können, nicht jedoch mit einer ungeradzahligen Anzahl derselben, welche in vielen Fällen zu einer Erhöhung der Schnittleistung eines Werkzeuges führen könnte.

Ziel der Erfindung ist es, die den bekannten Schneideinsätzen sowie auch den damit ausgestatteten Fräswerkzeugen eigentümlichen Unzulänglichkeiten auszuräumen. Es liegt deshalb die Aufgabe vor, einen Schneideinsatz der eingangs spezifizierten Art für Fräswerkzeuge sowie auch ein hiermit ausgestattetes Fräswerkzeug anzugeben, der bzw. das die Bildung einer über die vorgegebene Schnittlänge ununterbrochen durchgehende Schneidbahn in jeder einzelnen Reihe von am Werkzeugumfang anzuordnenden bzw. angeordneten Schneideinsätzen gewährleistet.

Gelöst wird diese Aufgabe erfindungsgemäß dadurch daß -nach dem Kennzeichen des Anspruchs 1 - die Querkantenflächen des Schneidwerkstoff-Blocks einen Einschnitt oder eine Vertiefung aufweisen, der bzw. die in den Eckzonen der Hauptflächen je einen in Richtung der Schnittkanten orientierten -flügelartigen - Vorsprung begrenzt, und daß dabei jeder Einschnitt oder jede Vertiefung eines Schneidwerkstoff-Blokkes eine Aufnahme für einen Vorsprung eines benachbart anzuordnenden, weiteren Schneidwerkstoff-Blockes bildet.

Nach der Erfindung sind also die Schneideinsätze für eine gegenseitig ineinandergreifende und fortlaufende Anordnung in einer vorgegebenen Spannut bzw. Spankammer ausgelegt, und zwar derart, daß über die vorgegebene Schnittlänge des Fräswerkzeuges eine ununterbrochene Schneidkante entsteht.

Hieraus ergibt sich bspw. für den Bau von Stirnfräsern oder Schaftfräsern, daß die bisher geltende Einschränkungsvorgabe der paarweisen Zusammenarbeit von zueinander voreilenden und nacheilenden Schneidkanten nunmehr unbeachtlich ist, so daß auch mit einer ungeraden Anzahl von in Umfangsrichtung verteilt angeordneten Schneidkanten und Spannuten bzw. Spankammern gearbeitet werden kann. Es läßt sich daher mit erfindungsgemäß ausgelegten Fräswerkzeugen problemlos ein höherer Verschub und damit auch eine größere Zerspanungsleistung erzielen, sofern an den benutzten Fräsmaschinen eine enstprechende Spindel-Antriebsleistung zur Verfügung steht und auch die Werkzeug-Spannvorrichtungen fest und stabil genug sind.

Nach der Erfindung kann es sich - gemäß Anspruch 2 - auch als vorteilhaft erweisen, wenn die Breite der Vorsprünge an den Schneidwerkstoff-Blöcken einem Bruchteil der Breite des Einschnitts bzw. der Vertiefung in diesen entspricht. Es ist dann nämlich leicht möglich, ein und dieselben Schneideinsätze auch bei Fräswerkzeugen in Benutzung zu nehmen, bei denen die stufenförmig gegeneinander versetzte Anordnung der Schneideinsätze in Normalrichtung zum Verlauf ihrer Schneidkanten unterschiedlich vorgegeben ist.

Besonders bewährt hat es sich erfindungsgemäß auch, wenn -nach Anspruch 3 - jeder Schneidwerkstoff-Block eine Wende-Schneidplatte bildet, bei der die beiden Hauptflächen wechselweise als Auflagefläche und als Freifläche benutzbar sind und bei der jede der beiden Längskantenflächen mit beiden Hauptflächen je eine Schneidkante bildet, wobei also vier zueinander parallele Schneidkanten vorhanden sind.

Es liegt auf der Hand, daß solche Schneideinsätze einen hohen Gebrauchswert haben, weil nacheinander vier verschiedene Schneidkanten in Arbeitsstellung gebracht werden können, bevor ein Auswechseln erforderlich wird.

Damit die als Wende-Schneidplatten ausgelegten Schneideinsätze in jeder möglichen Gebrauchslage zu optimalen Arbeitsergebnissen führen, liegt ein ausgestaltendes Erfindungsmerkmal - gemäß Anspruch 4 - auch darin, daß die an beiden Hauptflächen ausgebildeten und zueinander parallelen Schneidkanten in Vertikalebenen zu den Hauptflächen übereinanderliegen.

Es liegt ferner im Rahmen der Erfindung, wenn - gemäß Anspruch 5 - die Längskantenflächen der Schneidwerkstoff-Blökke eine zu den Schneidkanten parallele Ausnehmung aufweisen, wobei der Spanwinkel zwischen den Längskantenflächen und den Hauptflächen ein spitzer Winkel ist.

Ein Fräswerkzeug mit mindestens einer in seinen Umfang eingearbeiteten Spannut oder Spankammer entlang deren nacheilender Kante Schneideinsätze ausgerichtet und befestigt sind, zeichnet sich erfindungsgemäß -nach Anspruch 6 - besonders dadurch aus, daß eine Mehrzahl von Schneideinsätzen bzw. Schneidwerkstoff-Blöcken mit gegenseitig ineinandergreifenden Einschnitten oder Vertiefungen und Vorsprüngen in die Spannut oder Spankammer eingesetzt sind, wobei deren jeweils wirksame Schneidkanten eine in Umfangsrichtung des Fräswerkzeuges stufenweise zueinander versetzte Anordnung haben, miteinander aber eine kontinuierliche bzw. ununterbrochene Schnittbahn bilden.

Ein solches Fräswerkzeug ist - gemäß Anspruch 7 - nach der Erfindung auch noch dadurch gekennzeichnet, daß die Spannut oder Spankammer schraubenförmig entlang dem Werkzeugumfang verläuft und dabei die Schneideinsätze bzw. Schneidwerkstoff-Blöcke mit ihren Spanflächen und/oder ihren Schneidkanten längs deren Schraubenlinie orientiert sind.

Die Erfindung wird nachfolgend anhand von in der Zeichnung dargestellten Ausführungsbeispielen näher erläutert. Dabei zeigt

Figur 1 in Seitenansicht einen rechtsdrehenden Stirnfräser oder Schaftfräser, in dessen Spannuten bzw. Spankammern eine Mehrzahl von Schneideinsätzen zur Bildung einer kontinuierlichen Schneidkante mit positivem axialen Spanwinkel eingesetzt sind,

Figur 2 die linke Endansicht des in Fig. 1 dargestellten Stirnfräsers bzw.-Schaftfräsers,

Figur 3 in abgewickelter Darstellung die bei dem Stirn-bzw. Schaftfräser nach den Fig. 1 und 2 vorgesehenen -fünf - Reihen von Schneideinsätzen zur Bildung von über die gesamte Schnittlänge kontiunuierlich wirksamen Schneideinsäte,

Figur 4 in Draufsicht und vergrößertem Maßstab einen der in den Fig. 1 und 3 gezeigten Schneindeinsätze,

Figur 5 eine Ansicht auf den Schneideinsatz nach Fig. 4 in Richtung quer zu dessen Schneidkanten,

Figur 6 eine Ansicht des Schneideinsatzes nach Fig. 4 in Richtung seiner Schneidkanten gesehen,

Figur 7 eine vergrößerte Ausschnittdarstellung zweier Schneideinsätze in ihrer den Fig. 1 und 3 entsprechenden Einbauanordnung zum Fräser,

Figur 8 einen Schnitt entlang der Linie 8-8 in Fig. 7 durch einen Schneideinsatz und die ihn aufnehmende Tasche des Fräsers,

Figur 9 eine Rückansicht eines Schneideinsatzes in Pfeilrichtung 9-9 der Fig 7, wobei dessen räumlich geneigte Lage relativ zum Fräser angedeutet ist,

Figur 10 eine Draufsicht auf eine gegenüber den Fig. 4 bis 9 abgewandelte Ausführungsform eines Schneideinsatzes, welcher gemäß den Fig. 1 bis 3 am vorderen Ende eines Stirnfräsers in die Spannut bzw. Spankammer eingesetzt ist,

Figur 11 eine Längsansicht des Schneideinsatzes nach Fig. 10,

Figur 12 eine Queransicht des Schneideinsatzes nach Fig. 10,

Figur 13 die Seitenansicht eines Stirnfräsers bzw. Schaftfräsers, der mit gegenüber den Fig. 1 bis 9 in ihrer Ausführung abgewandelten Schneideinsätzen bestückt ist und

Figur 14 eine Endansicht des in Fig. 13 dargestellten Schneideinsatzes.

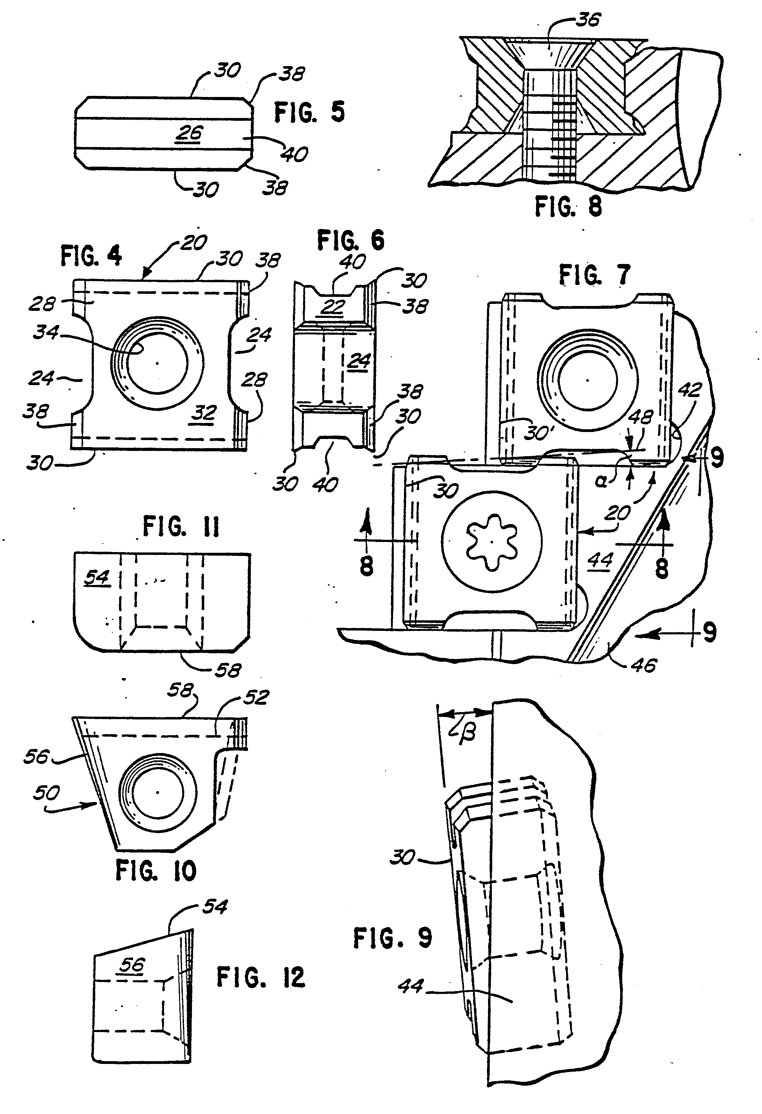

In den Fig. 4 bis 6 der Zeichnung ist eine bevorzugte Ausführungsform eines Schneideinsatzes 20 gezeigt, die im wesentlichen aus einem rechteckigen Schneidwerkstoff-Block besteht, sofern man gewisse Anpassungsmodifikationen außer Betracht läßt.

Die beiden voneinander abgewendeten Querkantenflächen 22 dieses Schneideinsatzes 20 weisen in ihrem Mittelbereich jeweils einen Einschnitt bzw. eine Vertiefung 24 auf, und zwar dergestalt, daß sich im Bereich der Enden der voneinander weggerichteten Längskantenflächen 26 seitwärts gerichtete, gewissermaßen flügelartige, Vorsprünge 28 befinden.

Der Schneideinsatz 20 hat gewissermaßen eine parallel epipetische Grundgestalt, wobei die Längskantenflächen 26 jeweils die Spanwinkelflächen für den Schneideinsatz 20 bilden.

Jede Längskantenfläche 26 bildet im Schnittpunkt mit den beiden großen Hauptflächen 32 des Schneideinsatzes 20 zwei Schneidkanten 30, derart, daß an diesem Schneideinsatz 20 vier Schneidkanten 30 vorhanden sind, wie das insbesondere die Fig. 6 und 8 erkennen lassen. Jede dieser Schneidkanten 30 kann dabei dadurch in ihre Schneidposition ausgerichtet werden, daß der Schneideinsatz 20 entweder um eine zu seinen Hauptflächen 32 vertikale Achse - um 180° gedreht wird, oder aber daß er - um 180° - mit der bisher nach unten gerichteten Hauptfläche 32 nach oben gewendet wird.

In bekannter Weise ist jeder Schneideinsatz 20 mit einer mittleren Durchgangsbohrung 34 versehen, welche eine Befestigungsschraube 36 aufnehmen kann, wie das in Fig. 8 gezeigt ist. Beidseitig weist die Durchgangsbohrung 34 eine Ansenkung auf, damit der Kopf der Befestigungsschraube mit jeder der beiden Hauptflächen 32 bündig abschließen kann, wenn sie ihre Befestigungslage eingenommen hat.

Im Schnittlinienbereich zwischen den Querkantenflächen 22 und den Hauptflächen 32 weist der Schneideinsatz 20 Abschrägungen 38 auf, welche verhindern sollen, daß die Enden der Schneidkanten 30 im Bereich scharfer Ecken ausbrechen können. Die Abschrägungen 38 sind dabei besonders deutlich in den Fig. 5 und 9 der Zeichnung zu sehen.

In Abhängigkeit von dem durch Fräsen zu bearbeitenden Werkstoff kann es auch wünschenswert sein, eine Ausnehmung 40 parallel zu den Schneidkanten 30 in die Längskantenflächen 26 einzuarbeiten, weil hierdurch für eine gegebene Schnittsituation ein positiver Spanwinkel gebildet werden kann. Die Ausbildung dieser Ausnehmung 40 ist dabei besonders aus den Fig. 6 und 8 der Zeichnung ersichtlich.

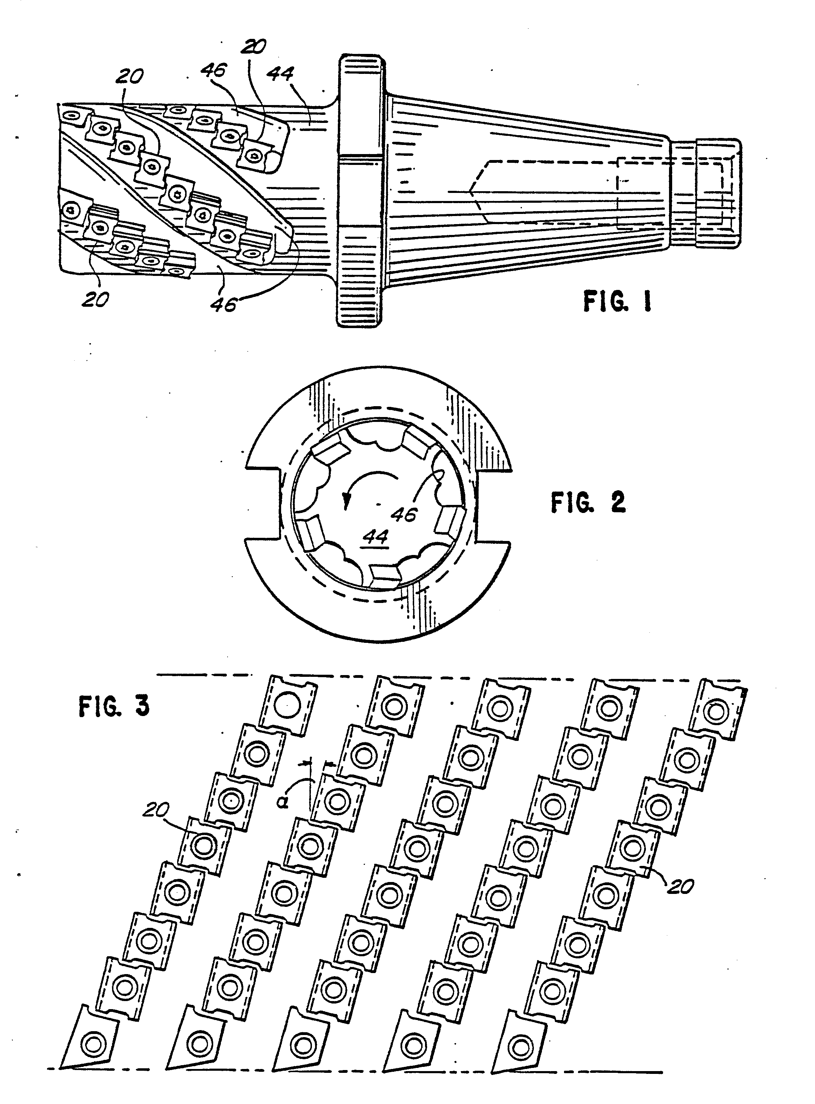

In Fig. 7 der Zeichnung ist eine vergrößerte Ausschnittdarstellung des Fräsers 44 zu sehen, wie er in den Fig. 1 und 3 gezeigt ist. Dabei ist besonders deutlich die Anordnung der Schneideinsätze 20 erkennbar, durch welche über die gesamte Schnittlänge des Fräsers eine ohne Lücken durchgehende Schnittbahn sichergestellt werden kann.

Es ist dort die wechselseitig ineinandergreifende und dadurch fortlaufend zusammenhängende Anordnung der Schneideinsätze 20 zu sehen, wobei die aufeinanderfolgenden und einander benachbarten Schneideinsätze 20 in Taschen 42 aufgenommen werden, die sich im Körper des Fräswerkzeuges 44 befinden und dort innerhalb der Spannut bzw. Spankammer 46 vorgesehen sind.

Erkennbar ist in Fig. 7 eine solche Anordnung der Taschen 42, daß die jeweils in diesen Taschen 42 aufgenommenen Schneideinsätze 20 mit den einander zugewendeten Einschnitten oder Vertiefungen 24 und Vorsprüngen 28 wechselseitig ineinandergreifen. Dabei nehmen die einander benachbarten Schneideinsätze 20 am Umfang des Werkzeuges 44 eine gegeneinander versetzte Winkellage ein, die durch den Verlauf der Spannut bzw. Spankammer 46 bestimmt ist. Hieraus resultierend erhalten dann auch die in Wirkstellung befindlichen Schneidkanten 30 der Schneideinsätze 20 eine längs der Spannut bzw. Spankammer 46 stufenartig gegeneinander abgesetzte Lage. Sie bilden jedoch trotz der aus der Winkelversetzung resultierenden sequentiellen Wirkung miteinander eine über die ganze Schnittlänge des Fräswerkzeugs 44 kontinuierlich durchgehende Schnittbahn miteinander aus.

Der axiale Spanwinkel kann für bestimmte Fräsaufgaben bei verschiedenen Fräswerkzeugen verschieden groß sein. Wenn aber eine fortlaufend kontinuierliche Schnittbahn über die gesamte Schnittlänge im Bereich sämtlicher Spannuten bzw. Spankammern 46 sowie Schneideinsätze 20 gefordert wird, dann muß die wechselseitige Anordnung und Plazierung der zu den Schneidkanten 30 eines Schneideinsatzes 20 gehörenden Vorsprünge 28 in den Ausnehmungen 24 des jeweils anderen Schneideinsatzes 20 in Abhängigkeit vom axialen Spanwinkel so gewählt werden, daß zwischen den von einander benachbarten Schneideinsätzen 20 durchlaufenen Schneidbahnen keinerlei Lücken bestehen.

Wie dabei die Anordnung der Schneideinsätze 20 relativ zueinander sowie zu den Spannuten bzw. Spankammern 46 zu treffen ist, ergibt sich aus Fig. 7. Dort ist eine vom oberen Ende der Schneidkante 30 des unteren Schneideinsatzes 20 ausgehende Linie 48 zu sehen, die durch das untere Ende der Schneidkante 30' des oberen Schneideinsatzes 20 geht. Dort ist auch der für die Kontinuität der Schneidbahnen notwendige, axiale Spanwinkel definiert.

Aus Fig. 7 ist dabei auch entnehmbar, daß sich der für die Kontinuität der Schneidbahn wesentliche Spanwinkel durch die unterschiedliche gegenseitige Eingriffstiefe von Vorsprüngen 28 sowie Einschnitten oder Vertiefungen 24 einander benachbarter Schneideinsätze 20 beeinflussen läßt. Je tiefer nämlich ein mit der Schneidkante 30 gleichgerichteter Vorsprung 28 der einen Schneidplatte 20 in den Einschnitt oder die Vertiefung 24 des nächstfolgenden Schneideinsatzes eintauchen kann, desto kleiner wird auch der Spanwinkel . Bei dem in der Zeichnung dargestellten Ausführungsbeispiel eines Fräswerkzeugs 44 ist der Steigungswinkel der Spannut oder Spankammer 46 etwas größer bemessen als der den Schneidkanten 30 der Schneideinsätze 20 zugeordnete axiale Spanwinkel . Als Folge der in Fig. 3 als Abwicklung dargestellten, gestaffelten Anordnung der ineinandergreifenden Schneideinsätze 20 ist aber trotz des Spanwinkels dieser Schneideinsätze 20 eine schraubenförmige Ausrichtung der Spannuten bzw. Spankammern 46 erforderlich.

Die aus Fig. 9 ersichtliche Rückansicht eines am Fräswerkzeug 44 montierten Schneideinsatzes 20 läßt dessen Schrägneigung zum Schnittwinkel erkennen. Diese Schrägneigung ist erforderlich, weil damit die einander gegenüberliegenden und einen axialen Spanwinkel aufweisenden Schneidkanten 30 jedes beliebigen Schneideinsatzes 20 auf den gleichen Radialabstand zur Drehachse des Fräswerkzeuges 44 gebracht und eingestellt werden können. Dann, wenn zur Herbeiführung des der Schneidkante 30 zugehörigen Spanwinkels der Schneideinsatz 20 in seiner eigenen Ebene gedreht wird, kann die nacheilende bzw. hintere Kante radial nach innen gedrückt werden, um dadurch hinter der Schneidkante 30 einen Freiraum zu schaffen. Die Enden der Schneidkante 30 werden verschiedenen oder unterschiedlichen Schwenkradien zugeordnet und müssen dadurch in den gleichen Schwenkradius gebracht werden, daß die Freifläche aus der Parallelausrichtung der Werkzeugdrehachse herausgedreht wird. Hieraus folgt dann, daß die zueinander parallelen Hauptflächen 32 zur parallelen Achsausrichtung des Werkzeuges 44 in einen kompensierenden Schnittwinkel gebracht werden, um die Enden der wirksamen Schneidkanten 30 einen gleichmäßigen Abstand zur Drehachse erhalten. Bei der im Vergleich zum Schwenkradius relativ kurzen Länge der Schneidkante 30 jedes Schneidein satzes 20 kann dann die hyperbolische Linearabweichung vernachlässigt werden.

Bei dem dem freien Ende des Fräswerkzeuges 44 zugeordneten Schneideinsatz 50, wie er einzeln in den Fig. 10 bis 12 gezeigt ist, handelt es sich um einen speziell ausgeführten Freischnitt-Schneideinsatz 50, weil dieser wegen der gegebenen Freiwinkelbedingungen für die Zerspanungsarbeit eine gegenüber den Schneideinsätzen 20 andere Formgestaltung erfordert, weist er lediglich eine Schneidkante auf, ist also nicht als Wende-Schneidplatte bzw. nicht kantenausrichtbar ausgeführt.

Den Fig. 10 bis 12 ist dabei zu entnehmen, daß der Freischnitt-Schneideinsatz 50 an seinem oberen Ende mit einem seitwärts gerichteten Vorsprung 52 im Bereich der Spanwinkelfläche 54 versehen ist. Der Vorsprung 52 dient dabei, wie insbesondere Fig. 3 erkennen läßt, dem gleichen Zweck wie die Vorsprünge 28 der Schneideinsätze 20. Er dient nämlich dem Zweck, eine Lückenbildung zwischen den Schneidkanten aufeinanderfolgender Schneideinsätze zu verhindern.

Um beim Anschnitt des Fräswerkzeuges 44 in dem mit 52 bezeichneten Bereich hinter der Spanwinkelfläche 54 den notwendigen Freiraum zu erhalten, ist die Kantenfläche 56 des Freischnitt-Schneideinsatzes 50 zur Spanwinkelfläche 54 in einem spitzen Winkel angeordnet, wobei die Kantenfläche 56 mit einem Krümmungsradius in die Hauptfläche übergeht, der am Anschnitt einen entsprechenden Krümmungsrdius entstehen läßt. Dieser Krümmungsradius kann gegebenenfalls auf eine kleine Anschrägung verkleinert werden, die ein Ausbrechen des Endes der langen und geraden Schneidkante verhindert.

In Fig. 10 wird durch gestrichelte Linie angedeutet, daß die Formgestaltung des Freischnitt-Schneideinsatzes 50 gegebenenfalls noch weiter vereinfacht werden kann, indem der seitwärts gerichtete Vorsprung 52 weggelassen und statt dessen die obere Kantenfläche von der Spanwinkelfläche 54 wegführend schräg angelegt wird. Auch hierdurch kann der für die Aufnahme des Vorsprungs 28 eines Schneideinsatzes 20 notwendige Freiraum erhalten werden.

Bei Fräsarbeiten, für die ein negativer, axialer Spanwinkel toleriert werden kann, wie das bspw. für die Kantenbearbeitung von Blechen oder Platten ohne Behinderung der Spanabführung der Fall ist, kann auch der Freischnitt-Schneideinsatz 50 am Fräswerkzeug 44 weggelassen werden.

Während in den Fig. 1 bis 3 die Ausgestaltung eines rechtsdrehenden Fräswerkzeuges 44 gezeigt ist, besteht problemlos auch die Möglichkeit, eine Ausbildung des Fräswerkzeuges 44 für linksdrehenden Einsatz. Hierzu braucht lediglich die in Fig. 3 gezeigte Abwicklungs-Darstellung in der Papierebene um 180° herumgeklappt zu werden. Es ergibt sich dann die Anordnung der Schneideinsätze 20 für ein linksdrehendes Fräswerkzeug 44 mit negativem axialen Spanwinkel.

Die Ausführungsform eines Fräswerkzeuges 44 bzw. der Schneideinsätze 20 nach den Fig. 1 bis 9 wird bevorzugt, weil dort die Schneideinsätze 20 als Wende-Schneidplatten mit vier verschiedenen Schneidkanten 30 benutzbar sind. Hierbei haben die im wesentlichen parallel-epipetisch gestalteten Schneideinsätze 20 eine rechtwinklig begrenzte Flachkörper-Blockform.

Es ist jedoch auch möglich und in vielen Fällen vorteilhaft, Schneideinsätze mit parallel-epipetischer Flachkörper-Blockform zu benutzen, die eine schiefwinklige Gestalt haben, bei denen also die beiden Hauptflächen anstelle einer Rechteckform eine Parallelogrammform aufweisen.

Auch bei einer solchen schiefwinkligen Flachkörper-Blockform stellen die einander gegenüberliegenden und zueinander parallelen Spanwinkelflächen jeweils zwei Schneidkanten -also insgesamt vier Schneidkanten - zur Verfügung. Von diesen vier Schneidkanten können jedoch je Einsatzposition nur zwei Schneidkanten benutzt werden, weil die schiefwinklige Gestalt zwangsläufig rechtsseitige und linksseitige Ausführungen entstehen läßt. Die Einsatzmöglichkeiten solcher - schiefwinkliger Schneideinsätze sind daher etwas eingeschränkt.

Es gibt jedoch insofern Ausnahmen, als bei Nutenfräsern und Zahnformvorfräsern sowohl rechtsseitige als auch linksseitige Ausführungsformen der schiefwinkligen Ausführungsformen von Schneideinsätzen gleichzeitig in Gebrauch genommen werden können.

Besonders bei Stirnfräsern bzw. Schaftfräsern mit kleinem Durchmesser sind jedoch Schneideinsätze der schiefwinkligen bzw. Parallelogrammausführung mit besonderem Vorteil einsatzfähig, weil sie sich auf die durch den kleinen Rotationsradius bedingten, von vorne nach hinten reichenden Abmessungsbeschränkungen besser abstimmen lassen.

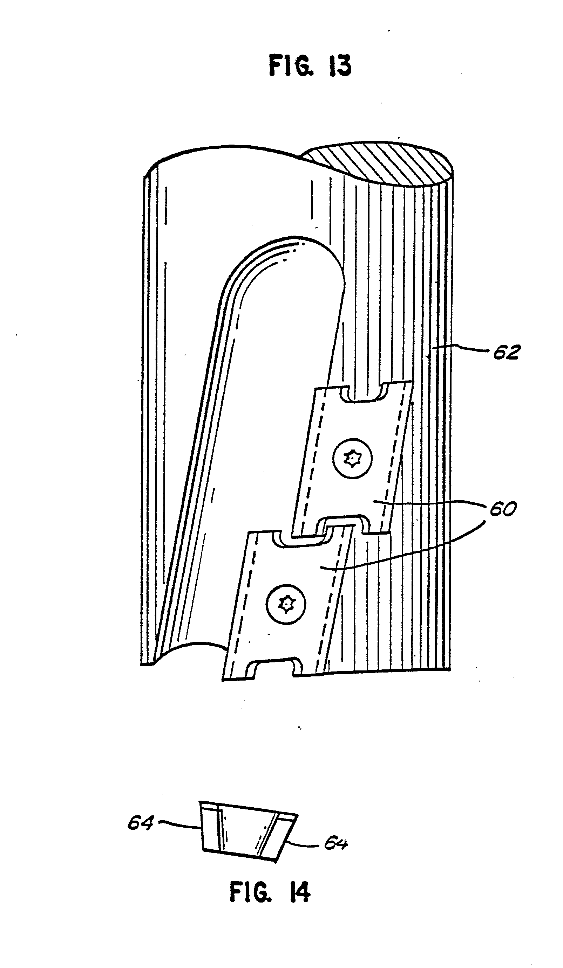

In den Fig. 13 und 14 sind schiefwinklige bzw. parallelogrammförmige Schneideinsätze 60 gezeigt, wie sie sich für Stirnfräser bzw. Schaftfräser 62 mit geringem Durchmesser einsetzen lassen. Diese Fräser können bspw. einen Durchmesser von etwa 25 mm (1″) aufweisen.

Bei dieser speziellen Ausführungsform von Schneideinsätzen 60 ist die zur Schaffung von zwei bestimmten Spanwinkelflächen bestimmte Ausnehmung weggelassen worden. Statt dessen ist die gesamte Schneidfläche 64 einfach so geschliffen, daß der gewünschte radiale Spanwinkel erhalten wird.

Da die schiefwinklige Ausgestaltung bzw. Parallelogramm-Bauform der Schneideinsätze 60 - schon von sich aus in der Anschnittposition hinter dem Boden der Spanwinkelfläche einen Freiraum zur Verfügung stellt, ist in der Anschnitt-oder Freischnittposition kein spezieller Freischnitt-Schneideinsatz erforderlich, wenn die Schneideinsätze 60 zum Einsatz gelangen.

Falls im Anschnitteil der Schneideinsätze ein Radius gewünscht wird, dann kann dieser gemäß US-PS 4 411 564 vorgesehen werden. Hier ist am Schnittpunkt der Hauptflächen und der Kantenfreiflächen ein Radius vorgesehen, welcher von der spitzwinkligen Ecke ausgeht und zur stumpfwinkligen Ecke hin kleiner wird, so daß an der spitzwinkligen Ecke nur noch eine geringfügige Abschrägung entsteht. Hieraus folgt, daß im Übergang vom Freischnitteinsatz zum nächstfolgenden benachbarten Schneideinsatz die Kontinuität der wirksamen Schneidkante gewahrt bleibt.

Durch die vorstehend beschriebene Auslegung von Fräswerkzeugen ergeben sich verschiedene Vorteile. Erreicht wird:
- eine kontinuierliche und nicht unterbrochene Schnittbahn bzw. Schneidkante durch Anordnung der einzelnen Schneideinsätze 20 oder 60 entlang einer einzelnen Spannut bzw. Spankammer, obowohl die Schneidkante aus einer Reihe von mehreren Schneideinsätzen besteht,
- die paarzahlige Anordnung von Spannuten bzw. Spankammern mit axial zueinander versetzten Schneideinsätzen entfällt,
- die Konstruktionsflexibilität wird erhöht, weil ohne weiteres die Möglichkeit besteht, ein Fräswerkzeug mit einer einzelnen Spannut bzw. Spankammer oder auch mit einer ungeraden Anzahl solcher Spannuten bzw. Spankammern auszustatten.

Der Vorschub und damit die Zerspanungsleistung läßt sich mit Hilfe der erfindungsgemäßen Fräswerkzeuge beträchtlich erhöhen, falls an der Fräsmaschine die entsprechende Antriebsleistung und eine genügend stabile Werkstückshalterung verfügbar ist.

## Ansprüche

1. Schneideinsatz für Fräswerkzeuge, dessen aus einem Schneidwerkstoff bestehender Block (20) im wesentlichen sechs äußere Begrenzungsflächen aufweist, nämlich zwei zueinander parallele und voneinander abgewendeten Hauptflächen (32), zwei ebenfalls zueinander parallelen und voneinander abgewendete Längskantenflächen (26) sowie zwei wiederum zueinander parallelen und voneinander abgewendete Querkantenflächen (22), wobei die beiden Hauptflächen (32) jeweils eine Auflagefläche und eine Freifläche des Schneidwerkstoff-Blocks (20) bilden, während die Längskantenflächen (26) an den Schnittpunkten mit mindestens einer der Hauptflächen (32) zwei zueinander parallele Schneidkanten (30) bestimmen sowie selbst als die Spanwinkelflächen des Schneidwerkstoff-Blocks (20) wirksam sind,

**dadurch gekennzeichnet,**

daß die Querkantenflächen (22) des Schneidwerkstoff-Blocks (20) einen Einschnitt oder eine Vertiefung (24) aufweisen, der bzw. die in den Eckzonen der Hauptflächen (32) je einen in Richtung der Schneidkanten (30) orientierten -flügelartigen -Vorsprung (28) begrenzt, und daß dabei jeder Einschnitt oder jede Vertiefung (24) eines Schneidwerkstoff-Blocks (20) eine Aufnahme für einen Vorsprung (28) eines benachbart anzuordnenden, weiteren Schneidwerkstoff-Blocks (20) bildet (Fig. 1, 3 und 7).

2. Schneideinsatz nach Anspruch 1,

**dadurch gekennzeichnet,**

daß die Breite der Vorsprünge (28) einem Bruchteil der Breite der Einschnitte bzw. Vertiefungen (24) entspricht (Fig. 4 und 7).

3. Schneideinsatz nach einem der Ansprüche 1 und 2,

**dadurch gekennzeichnet,**

daß der Schneidwerkstoff-Block (20) eine Wende-Schneidplatte bildet, bei der die beiden Hauptflächen (32) wechselweise als Auflagefläche und als Freifläche benutzbar sind und bei der jede der beiden Längskantenflächen (26) mit beiden Hauptflächen (32) je eine Schneidkante (30) bildet, wobei am Schneidwerkstoff-Block (20) also vier zueinander parallele Schneidkanten (30) vorhanden sind.

4. Schneideinsatz nach einem der Ansprüche 1 bis 3,

**dadurch gekennzeichnet,**

daß die an beiden Hauptflächen (32) ausgebildeten und zueinander parallelen Schneidkanten (30) in Vertikalebenen zu den Hauptflächen (32) übereinanderliegen (Fig. 6 und 8).

5. Schneideinsatz nach einem der Ansprüche 1 bis 4,

**dadurch gekennzeichnet,**

daß die Längskantenflächen (26) des Schneidwerkstoff-Blocks (20) eine zu den Schneidkanten (30) parallele Ausnehmung (40) aufweisen, wobei der Spanwinkel zwischen den Längskantenflächen (26) und den Hauptflächen (32) ein spitzer Winkel ist.

6. Fräswerkzeug (44) mit mindestens einer in seinen Umfang eingearbeiteten Spannut oder Spankammer (46), entlang deren nacheilender Kante Schneideinsätze (20) ausgerichtet und befestigt sind, deren Ausgestaltung einem oder mehreren der Ansprüche 1 bis 5 entspricht,

**dadurch gekennzeichnet,**

daß eine Mehrzahl von Schneideinsätzen bzw. Schneidwerkstoff-Blöcken (20) mit gegenseitig ineinandergreifenden Einschnitten oder Vertiefungen (24) und Vorsprüngen (28) in die Spannut oder Spankammer (46) eingesetzt sind, wobei deren jeweils wirksame Schneidkanten (30) eine in Umfangsrichtung des Fräswerkzeuges (44) stufenweise zueinander versetzte Anordnung haben, miteinander aber eine kontinuierliche bzw. ununterbrochene Schnittbahn bilden.

7. Fräswerkzeug nach Anspruch 6,

**dadurch gekennzeichnet,**

daß jede Spannut oder Spankammer (46) - schraubenförmig entlang dem Werkzeugumfang verläuft und dabei die Schneideinsätze bzw. Schneidwerkstoff-Blöcke (20) mit ihren Spanflächen und/oder ihren Schneidkanten (30) längs der Schraubenlinie der Spannuten oder Spankammern (46) orientiert sind (Fig. 13).

FIG. 1

FIG. 2

FIG. 3

FIG. 5

FIG. 8

FIG. 4

FIG. 6

FIG. 7

FIG. 11

FIG. 10

FIG. 12

FIG. 9

## FIG. 13

62

60

## FIG. 14

64

64